# EUROPÄISCHE PATENTANMELDUNG

(11) **EP 2 083 192 A2**
(43) Veröffentlichungstag der Anmeldung: **29.07.2009**
(21) Anmeldenummer: 09150190.8
(22) Anmeldetag: 08.01.2009
(51) Int. Cl.: F16F 15/16

(54) **Torsionsschwingungsdämpferanordnung, insbesondere für den Antriebsstrang eines Fahrzeugs**

(30) Priorität: 22.01.2008 DE 102008005487
(71) Anmelder: ZF Friedrichshafen AG, 88038 Friedrichshafen (DE)
(72) Erfinder: Busold, Thomas, 36039 Fulda (DE); Carlson, Cora, 97456 Dittelbrunn (DE); Dögel, Thomas, 97688 Bad Kissingen (DE); Orlamünder, Andreas, 97453 Schonungen (DE); Schade, Thomas, 97464 Niederwerrn (DE)

(57) **Zusammenfassung**

Eine Torsionsschwingungsdämpferanordnung, insbesondere für den Antriebsstrang eines Fahrzeugs, umfasst eine Primärseite (12) und eine über eine Dämpferfluidanordnung mit der Primärseite (12) zur Drehung um eine Drehachse (A) und zur Relativdrehung bezüglich einander gekoppelte Sekundärseite (14), wobei die Dämpferfluidanordnung ein ein Drehmoment zwischen der Primärseite (12) und der Sekundärseite (14) übertragendes erstes Dämpferfluid mit geringerer Kompressibilität und ein bei Druckerhöhung des ersten Dämpferfluids belastetes zweites Dämpferfluid mit höherer Kompressibilität umfasst, wenigstens eine Gruppe (52, 54) von Druckausgleichsanordnungen außerhalb der Primärseite (12) und der Sekundärseite (14), wobei jede Druckausgleichsanordnung (52', 54') einen Ausgleichsraum (34) für erstes Dämpferfluid und einen durch einen Trennorgan (38) vom Ausgleichsraum (34) getrennten Arbeitsraum (36) für zweites Dämpferfluid aufweist, wobei bei wenigstens einer Gruppe (52, 54) von Druckausgleichsanordnungen wenigstens eine Druckausgleichsanordnung (52', 54') wahlweise zur Gruppe zukoppelbar oder von dieser abkoppelbar ist.

## Beschreibung

Die vorliegende Erfindung betrifft eine Torsionsschwingungsdämpferanordnung, insbesondere für den Antriebsstrang eines Fahrzeugs, umfassend eine Primärseite und eine über eine Dämpferfluidanordnung mit der Primärseite zur Drehung um eine Drehachse und zur Relativdrehung bezüglich einander gekoppelte Sekundärseite, wobei die Dämpferfluidanordnung ein ein Drehmoment zwischen der Primärseite und der Sekundärseite übertragendes erstes Dämpferfluid mit geringerer Kompressibilität und ein bei Druckerhöhung des ersten Dämpferfluids belastetes zweites Dämpferfluid mit höherer Kompressibilität umfasst, sowie wenigstens eine außerhalb der Primärseite und der Sekundärseite angeordnete Gruppe von Druckausgleichsanordnungen.

Eine derartige aus der nachveröffentlichten deutschen Patentanmeldung DE 10 2006 059 880 grundsätzlich bekannte Torsionsschwingungsdämpferanordnung ist in Fig. 1 gezeigt. Die Torsionsschwingungsdämpferanordnung 10 umfasst eine allgemein mit 12 bezeichnete Primärseite, die mit einer hier nicht gezeigten Antriebswelle, beispielsweise einer Kurbelwelle einer Brennkraftmaschine, zur gemeinsamen Drehung um eine Drehachse A zu koppeln ist. Eine Sekundärseite 14 leitet das Drehmoment weiter in den Antriebsstrang, beispielsweise zu einer im Momentenfluss dann folgenden Reibungskupplung 16. Es ist selbstverständlich, dass hier im Momentenfluss andere Komponenten, beispielsweise ein hydrodynamischer Drehmomentwandler oder dergleichen, folgen können.

Die Primärseite 12 begrenzt mit einem im Wesentlichen topfartigen Gehäuse 18 und einer Abschlussscheibe 20 einen ringartigen Raum nach radial außen und in axialer Richtung. Nach radial innen ist dieser Raum begrenzt durch ein Bauteil 22 der Sekundärseite 14. Der so gebildete ringartige Raum 24 ist durch an der Primärseite vorgesehene und nach radial innen auf das Bauteil 22 zu sich erstreckende Trennwandungen und durch am Bauteil 22 vorgesehene und nach radial außen sich erstreckende Trennwandungen in eine Mehrzahl von in Umfangsrichtung aufeinander folgenden Verdrängungskammern unterteilt, auf welche später noch Bezug genommen wird.

Über eine allgemein mit 26 bezeichnete Drehdurchführung, deren rotierender Teil 28 mit dem Bauteil 22 drehfest bzw. integral verbunden ist, stehen die Verdrängungskammern in Verbindung mit einer Mehrzahl von am nicht rotierenden Teil 30 der Drehdurchführung 26 vorgesehenen Druckausgleichsanordnungen 32. Jede dieser Druckausgleichsanordnungen 32 weist einen Ausgleichsraum 34 für erstes Dämpferfluid und einen Arbeitsraum 36 für zweites Dämpferfluid auf. Der Ausgleichsraum 34 und der Arbeitsraum 36 sind durch ein Trennorgan 38, bei der gezeigten zylindrischen Ausgestaltung im Allgemeinen als Kolben ausgebildet, voneinander fluiddicht getrennt. Über verschiedene in der Drehdurchführung 26 vorgesehene Leitungsverbindungen stehen die Ausgleichsräume 34 der Druckausgleichsanordnungen 32 in Verbindung mit den verschiedenen durch die Primärseite 12 und die Sekundärseite 14 begrenzten Verdrängungskammern.

Findet eine Relativdrehung zwischen der Primärseite 12 und der Sekundärseite 14 statt, hat dies zur Folge, dass das Volumen von zumindest einer Verdrängungskammer verringert wird. Das darin enthaltene erste Dämpferfluid, welches beispielsweise Öl sein kann, also im Wesentlichen inkompressibel ist, wird dabei aus dieser Verdrängungskammer und über die Drehdurchführung 26 in Richtung zu dem oder den zugeordneten Ausgleichsräumen 34 verdrängt. Das heißt der Druck des ersten Dämpferfluids in den Ausgleichsräumen 34 nimmt zu und belastet dadurch das in den Arbeitsräumen 36 enthaltene zweite Dämpferfluid, das beispielsweise Luft oder ein anderes Gas sein kann und mithin eine höhere Kompressibilität aufweist, als das erste Dämpferfluid. Da die Arbeitsräume 36 im Allgemeinen abgeschlossen sind, wird das zweite Dämpferfluid komprimiert, so dass eine Rückstellkraft erzeugt wird.

Bei derartigen grundsätzlich auch als Gasfeder-Zweimassenschwungräder bezeichneten Torsionsschwingungsdämpferanordnungen besteht ein wesentlicher Vorteil darin, dass ein Großteil des Volumens des ersten Dämpferfluids und das gesamte Volumen des zweiten Dämpferfluids nicht in dem rotierenden Systembereich vorhanden sind, also beispielsweise nicht im Bereich der Primärseite 12 und der Sekundärseite 14 angeordnet sind, so dass dort eine sehr kompakte Bauweise realisiert werden kann.

Es ist die Aufgabe der vorliegenden Erfindung, eine derartige Torsionsschwingungsdämpferanordnung so auszugestalten, dass deren Dämpfungsverhalten an verschiedene Betriebszustände eines Antriebsstrangs anpassbar ist.

Erfindungsgemäß wird diese Aufgabe gelöst durch eine Torsionsschwingungsdämpferanordnung, insbesondere für den Antriebsstrang eines Fahrzeugs, umfassend eine Primärseite und eine über eine Dämpferfluidanordnung mit der Primärseite zur Drehung um eine Drehachse und zur Relativdrehung bezüglich einander gekoppelte Sekundärseite, wobei die Dämpferfluidanordnung ein ein Drehmoment zwischen der Primärseite und der Sekundärseite übertragendes erstes Dämpferfluid mit geringerer Kompressibilität und ein bei Druckerhöhung des ersten Dämpferfluids belastetes zweites Dämpferfluid mit höherer Kompressibilität umfasst, wenigstens eine Gruppe von Druckausgleichsanordnungen außerhalb der Primärseite und der Sekundärseite, wobei jede Druckausgleichsanordnung einen Ausgleichsraum für erstes Dämpferfluid und einen durch einen Trennorgan vom Ausgleichsraum getrennten Arbeitsraum für zweites Dämpferfluid aufweist, wobei bei wenigstens einer Gruppe von Druckausgleichsanordnungen wenigstens eine Druckausgleichsanordnung wahlweise zur Gruppe zukoppelbar oder von dieser abkoppelbar ist.

Bei dem erfindungsgemäßen Aufbau einer Torsionsschwingungsdämpferanordnung ist es also möglich, wahlweise eine oder mehrere Druckausgleichsanordnungen zu oder abzukoppeln, so dass eine jeweils betroffene Gruppe abhängig vom Betriebszustand einmal mit mehr und einmal mit weniger Druckausgleichsanordnungen wirksam sein kann. Dies beeinträchtigt selbstverständlich die Rückstellkraftcharakteristik und ermöglicht somit in einfacher Weise die Anpassung an verschiedene erforderliche Dämpfungsverhalten. Unterstützt wird dies dadurch, dass bei dem erfindungsgemäßen Aufbau die Druckausgleichsanordnungen nicht im Bereich der Primärseite und der Sekundärseite angeordnet sind, also in einem nicht rotierenden Systembereich liegen, so dass Platzbeschränkungen für die zum wahlweisen An- oder Abkoppeln der Druckausgleichsanordnungen erforderlichen konstruktiven Maßnahmen weniger kritisch sind, als im Bereich der Primärseite und der Sekundärseite.

Der Aufbau kann beispielsweise derart sein, dass die Primärseite und die Sekundärseite wenigstens eine Verdrängungskammer begrenzen, deren Volumen bei Relativdrehung zwischen der Primärseite und der Sekundärseite variabel ist, und dass der wenigstens einen Verdrängungskammer eine Gruppe von Druckausgleichsanordnungen zugeordnet ist.

Um in beiden Relativdrehrichtungen zwischen Primärseite und Sekundärseite, also bei Zugbelastung und bei Schubbelastung, in zuverlässiger Weise eine Rückstellcharakteristik bereitstellen zu können, wird weiter vorgeschlagen, dass eine erste Gruppe von Verdrängungskammern mit wenigstens einer ersten Verdrängungskammer und eine zweite Gruppe von Verdrängungskammern mit wenigstens einer zweiten Verdrängungskammer vorgesehen sind, wobei bei Relativdrehung zwischen der Primärseite und der Sekundärseite in einer ersten Relativdrehung das Volumen der Verdrängungskammer(n) der ersten Gruppe zunimmt und das Volumen der Verdrängungskammer(n) der zweiten Gruppe abnimmt und bei Relativdrehung zwischen der Primärseite und der Sekundärseite in einer zweiten Relativdrehrichtung das Volumen der Verdrängungskammer(n) der ersten Gruppe abnimmt und das Volumen der Verdrängungskammer(n) der zweiten Gruppe zunimmt. Wenigstens einer Gruppe von Verdrängungskammern ist dabei eine Gruppe von Druckausgleichsanordnungen zugeordnet, wobei vorzugsweise weiter vorgesehen sein kann, dass der ersten Gruppe von Verdrängungskammern eine erste Gruppe von Druckausgleichsanordnungen zugeordnet ist und der zweiten Gruppe von Verdrängungskammern eine zweite Gruppe von Druckausgleichsanordnungen zugeordnet ist.

Die wahlweise Zu- bzw. Abkoppelbarkeit einer oder mehrerer Druckausgleichsanordnungen kann beispielsweise dadurch realisiert werden, dass den Druckausgleichsanordnungen wenigstens einer Gruppe von Druckausgleichsanordnungen jeweils ein erstes Schaltventil zugeordnet ist, um diese Druckausgleichsanordnungen zur Gruppe zuzukoppeln oder von dieser abzukoppeln.

Eine sehr hohe Flexibilität beim Zu- bzw. Abschalten von Druckausgleichsanordnung und mithin eine entsprechend hohe Flexibilität bei der Einstellung der Dämpfungscharakteristik kann dadurch sichergestellt werden, dass bei wenigstens einer Gruppe von Druckausgleichsanordnungen wenigstens zwei Ausgleichskammern parallel schaltbar sind. Dazu kann beispielsweise vorgesehen sein, dass von den ersten Schaltventilen der Druckausgleichsanordnungen weg führende Leitungen für erstes Dämpferfluid zu einer Sammelleitung zu einer Drehdurchführung führen.

Bei einer alternativen Ausgestaltungsvarante kann vorgesehen sein, dass bei wenigstens einer Gruppe von Druckausgleichsanordnungen wenigstens zwei Ausgleichskammern seriell schaltbar sind. Hierzu kann beispielsweise vorgesehen sein, dass eine von einem ersten Schaltventil einer Druckausgleichsanordnung weg führende Leitung für erstes Dämpferfluid zu einer von einem Ausgleichsraum einer anderen Druckausgleichsanordnung zu deren ersten Schaltventil führenden Leitung für erstes erstes Dämpferfluid führt.

Um die Dämpfungscharakteristik einer erfindungsgemäßen Torsionsschwingungsdämpferanordnung zusätzlich zu den vorangehend beschriebenen Maßnahmen noch weitergehend beeinflussen zu können, wird vorgeschlagen, dass bei wenigstens einer Gruppe von Druckausgleichsanordnungen wenigstens ein Arbeitsraum in und außer Verbindung mit einer Quelle für unter Druck stehendes zweites Dämpferfluid bringbar ist.

Das wahlweise Herstellen bzw. Unterbrechen der Verbindung zu der Quelle für unter Druck stehendes zweites Dämpferfluid kann beispielsweise dadurch realisiert werden, dass dem wenigstens einen Arbeitsraum ein zweites Schaltventil zugeordnet ist.

Auch im Zusammenhang mit den Arbeitsräumen kann eine sehr feinfühlige Zu- bzw. Abschaltcharakteristik dadurch erzeugt werden, dass die Arbeitsräume mehrerer Druckausgleichsanordnungen wenigstens einer Gruppe von Druckausgleichsanordnungen über die diesen zugeordneten zweiten Schaltventile parallel in und außer Verbindung mit der Quelle für unter Druck stehendes zweites Dämpferfluid schaltbar sind. Hierzu kann beispielsweise vorgesehen sein, dass von den zweiten Schaltventilen weg führende Leitungen zu einer gemeinsamen Leitung zur Quelle für unter Druck stehendes zweites Dämpferfluid führen.

Bei einer alternativen Ausgestaltungsform wird vorgeschlagen, dass die Arbeitsräume mehrerer Druckausgleichsanordnungen wenigstens einer Gruppe von Druckausgleichsanordnungen über diesen zugeordnete zweite Schaltventile seriell in und außer Verbindung mit der Quelle für unter Druck stehendes zweites Dämpferfluid schaltbar sind. Dies kann beispielsweise dadurch realisiert werden, dass eine von dem zweiten Schaltventil einer Druckausgleichsanordnung weg führende Leitung für zweites Dämpferfluid zu einer von einem Arbeitsraum einer anderen Druckausgleichsanordnung zu deren zweiten Schaltventil führenden Leitung für zweites Dämpferfluid führt.

Um bei derartiger serieller Ausgestaltung den Aufbau möglichst einfach zu halten, wird weiter vorgeschlagen, dass eine Sammelleitung vorgesehen ist, zu welcher die Arbeitsräume mehrerer Druckausgleichsanordnungen offen sind, und dass in der Sammelleitung zwischen zwei Anbindungsstellen von Arbeitsräumen ein zweites Schaltventil vorgesehen ist, durch welches die Sammelleitung wahlweise absperrbar oder freigebbar ist.

Gemäß einem weiteren Aspekt betrifft die vorliegende Erfindung eine Torsionsschwingungsdämpferanordnung, insbesondere für den Antriebsstrang eines Fahrzeugs, umfassend eine Primärseite und eine über eine Dämpferfluidanordnung mit der Primärseite zur Drehung um eine Drehachse und zur Relativdrehung bezüglich einander gekoppelte Sekundärseite, wobei die Dämpferfluidanordnung ein ein Drehmoment zwischen der Primärseite und der Sekundärseite übertragendes erstes Dämpferfluid mit geringerer Kompressibilität und ein bei Druckerhöhung des ersten Dämpferfluids belastetes zweites Dämpferfluid mit höherer Kompressibilität umfasst, wobei die Primärseite und die Sekundärseite eine erste Gruppe von Verdrängungskammern mit wenigstens einer ersten Verdrängungskammer und eine zweite Gruppe von Verdrängungskammern mit wenigstens einer zweiten Verdrängungskammer begrenzen, wobei bei Relativdrehung zwischen der Primärseite und der Sekundärseite in einer ersten Relativdrehung das Volumen der Verdrängungskammer(n) der ersten Gruppe zunimmt und das Volumen der Verdrängungskammer(n) der zweiten Gruppe abnimmt und bei Relativdrehung zwischen der Primärseite und der Sekundärseite in einer zweiten Relativdrehrichtung das Volumen der Verdrängungskammer(n) der ersten Gruppe abnimmt und das Volumen der Verdrängungskammer(n) der zweiten Gruppe zunimmt, wobei jeder Gruppe von Verdrängungskammern eine außerhalb der Primärseite und der Sekundärseite angeordnete Gruppe von Druckausgleichsanordnungen mit wenigstens einer Druckausgleichsanordnung zugeordnet ist, wobei jede Druckausgleichsanordnung einen mit der zugeordneten Gruppe von Verdrängungskammern in Verbindung stehenden oder bringbaren Ausgleichsraum für erstes Dämpferfluid und einen von dem Ausgleichsraum durch ein Trennorgan getrennten Arbeitsraum für zweites Dämpferfluid umfasst.

Durch die definierte Zuordnung jeweiliger Gruppen von Druckausgleichsanordnungen zu Gruppen von Verdrängungskammern kann bereits in der Konstruktionsphase eine definierte Auslegung vorgesehen werden, welche eine gezielte Differenzierung zwischen Schubbelastung und Zugbelastung gestattet. Ein Umschaltmechanismus, welcher dafür sorgt, dass alternierend die Verdrängungskammern einer Gruppe und dann die Verdrängungskammern einer anderen Gruppe mit der- bzw. denselben Druckausgleichsanordnungen verbunden werden können oder müssen, ist hier nicht erforderlich. Es ist selbstverständlich, dass eine derartige Ausgestaltung kombiniert werden kann mit einer oder mehreren der vorangehend angeführten und nachfolgend detailliert erläuterten Merkmalsgruppen, also z. B. der wahlweisen Zuund Abschaltbarkeit von Druckausgleichsanordnungen bzw. deren Ausgleichsräumen oder/und der wahlweisen Herstellung oder Unterbrechung der Verbindung einzelner oder mehrerer Arbeitsräume von Druckausgleichskammern mit einer Quelle für unter Druck stehendes zweites Dämpferfluid.

Die Erfindung wird nachfolgend mit Bezug auf die beiliegenden Figuren detailliert beschrieben. Es zeigen:
- Fig. 1: im Längsschnitt eine aus dem Stand der Technik bekannte Tor- sionsschwingungsdämpferanordnung mit ihren wesentlichen Systembereichen;
- Fig. 2: in schaltbildartiger Darstellung eine Ausgestaltungsart einer er- findungsgemäßen Torsionsschwingungsdämpferanordnung;
- Fig. 3: eine Teil-Querschnittansicht einer Gruppe von Druckausgleichs- anordnungen;
- Fig. 4: eine Teil-Längsschnittansicht, welche die An- und Abkopplung einzelner Druckausgleichsanordnungen veranschaulicht;
- Fig. 5: eine Detail-Schnittansicht, welche das Trennen einzelner Lei- tungsabschnitte voneinander veranschaulicht;
- Fig. 6: eine der Fig. 2 entsprechende Ansicht einer alternativen Ausgestaltungsart;
- Fig. 7: eine der Fig. 3 entsprechende Ansicht einer alternativen Ausge- staltungsform;
- Fig. 8: eine der Fig. 2 entsprechende Ansicht einer alternativen Ausge- staltungsart;
- Fig. 9: eine der Fig. 4 entsprechende Ansicht einer alternativen Ausge- staltungsform;
- Fig. 10: das in Fig. 9 gezeigte System in einem anderen Schaltzustand;
- Fig. 11-16: verschiedene Kennliniendiagramme, welche die Wirkungsweise einer erfindungsgemäßen Torsionsschwingungsdämpferanord- nung veranschaulichen.

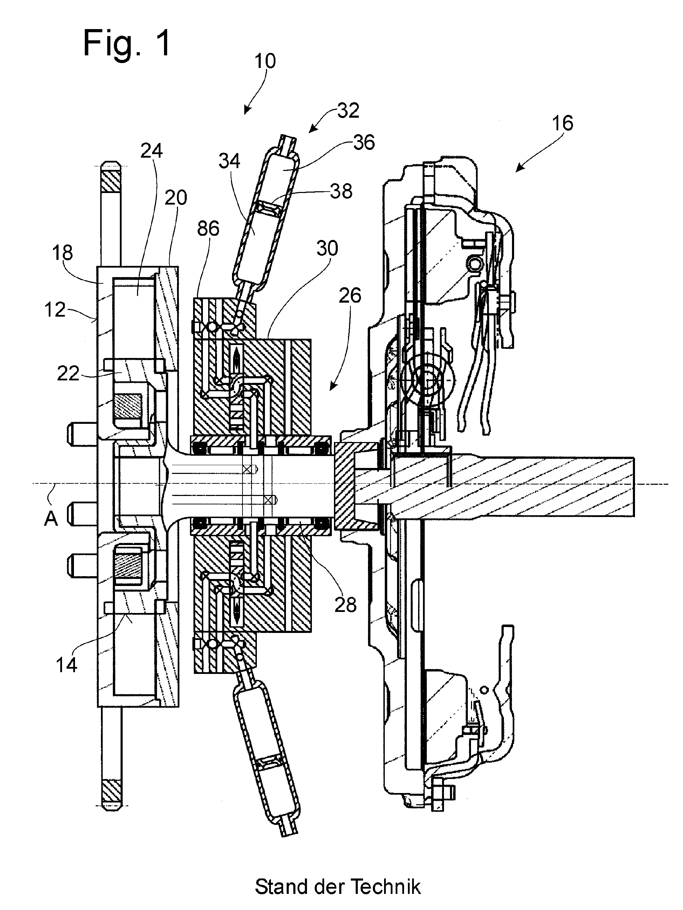

Im Folgenden werden Details einer erfindungsgemäß aufgebauten Torsionsschwingungsdämpferanordnung beschrieben, die jedoch in grundsätzlichen Aspekten so aufgebaut sein kann, wie vorangehend mit Bezug auf die Fig. 1 beschrieben.

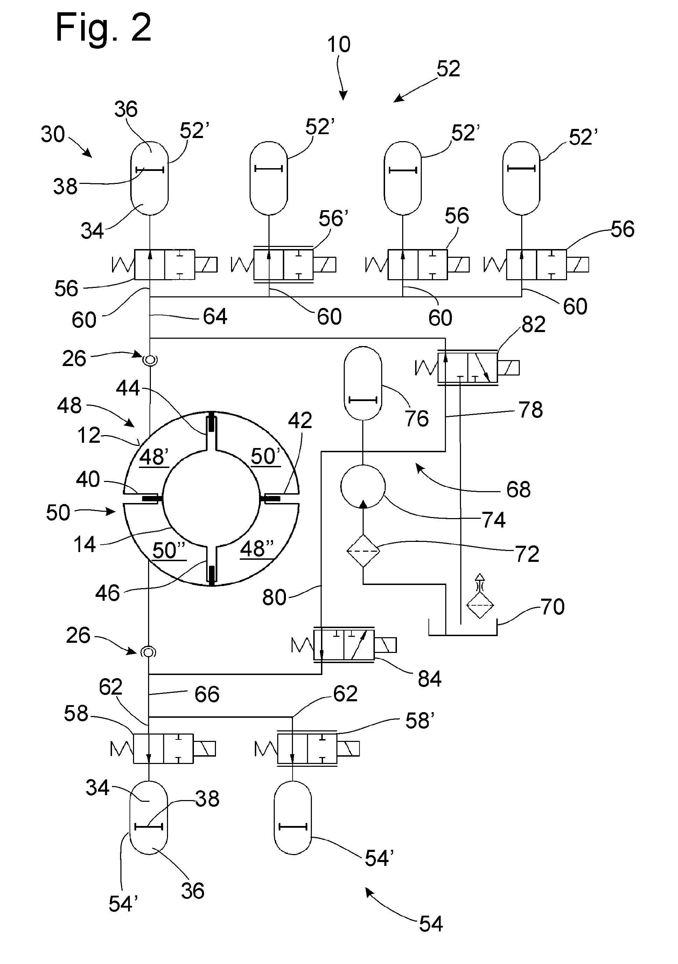

Eine erste Ausgestaltungsvariante einer erfindungsgemäß aufgebauten Torsionsschwingungsdämpferanordnung 10 ist dabei in den Fig. 2, 3, 4 und 5 veranschaulicht. In der Prinzipdarstellung der Fig. 2 erkennt man grundsätzlich die Primärseite 12 mit den daran vorgesehenen Trennwandungen 40, 42 sowie die Sekundärseite 14 mit den daran vorgesehenen Trennwandungen 44, 46. Zwischen jeweils zwei Trennwandungen sind Verdrängungskammern 48', 50', 48", 50" in Umfangsrichtung begrenzt, wobei die beiden Verdrängungskammern 48', 48" eine erste Gruppe 48 von Verdrängungskammern bilden, während die beiden Verdrängungskammern 50', 50" eine zweite Gruppe 50 von Verdrängungskammern bilden. Die beiden Kammern einer jeweiligen Gruppe 48, 50 sind miteinander in Verbindung. Bei Relativdrehung zwischen der Primärseite 12 und der Sekundärseite 14 verringert sich jeweils das Volumen der beiden Verdrängungskammern einer der beiden Gruppen 48 oder 50, während das Volumen der beiden Verdrängungskammern der anderen Gruppe 48 oder 50 entsprechend zunimmt.

In Zuordnung zu jeder Gruppe 48, 50 von Verdrängungskammern sind jeweilige Gruppen 52, 54 von Druckausgleichsanordnungen 52', 54' vorgesehen. Man erkennt, dass die Gruppe 52 von Druckausgleichsanordnungen insgesamt vier Druckausgleichsanordnungen 52' umfasst, während die Gruppe 54 von Druckausgleichsanordnungen insgesamt zwei Druckausgleichsanordnungen 54' umfasst. Die Druckausgleichsanordnungen der beiden Gruppen können grundsätzlich von gleichem Aufbau sein, also beispielsweise im Wesentlichen zylinderartig aufgebaut sein, wobei das vorangehend bereits mit Bezug auf die Fig. 1 beschriebene Trennorgan 38 eine jeweilige Ausgleichskammer 34 für erstes Dämpferfluid von einer Arbeitskammer 36 für zweites Dämpferfluid trennt.

Jeder Druckausgleichsanordnung 52' bzw. 54' der beiden Gruppen 52, 54 von Druckausgleichsanordnungen ist ein erstes Schaltventil 56 bzw. 58 zugeordnet. Diese können so ausgebildet sein, dass sie zwischen zwei Zuständen umschaltbar sind, in welchen eine jeweilige Druckausgleichskammer 34 mit einer Leitung 60 bzw. 62 in Verbindung ist, oder diese Verbindung unterbrochen ist. Auch ist es möglich, eines oder mehrere der jeweiligen ersten Schaltventile, wie anhand der Schaltventile 56' und 58' verdeutlicht, so auszugestalten, dass eine analoge Kennung vorgesehen ist, um ein sanftes Zuoder Abschalten zu realisieren. Die Leitungen 60, 62 führen über jeweilige Sammelleitungen 64 bzw. 66 zu der in Fig. 2 nur symbolisch angedeuteten Drehdurchführung 26. Man erkennt daraus, dass alle vorangehend bereits erläuterten Systembereiche, also insbesondere die Druckausgleichsanordnungen 52', 54' und die diesen jeweils zugeordneten ersten Schaltventile 56, 58 dem nicht rotierenden Teil 30 der Drehdurchführung 26 zuzuordnen sind, also außerhalb der Primärseite 12 und der Sekundärseite 14 angeordnet sind. Über die Drehdurchführung 26 besteht dann eine Verbindung der jeweiligen Sammelleitungen 64, 66 mit den zugeordneten Verdrängungskammern 48', 48" bzw. 50', 50".

Weiter erkennt man in Fig. 2 eine Quelle 68 für unter Druck stehendes erstes Dämpferfluid. Diese Quelle 68 umfasst ein Reservoir 70, in welchem das erste Dämpferfluid im Wesentlichen drucklos enthalten ist. Über einen Filter 72 entnimmt eine Pumpe 74 das Druckfluid aus dem Reservoir 70 und fördert dieses unter Druck zu einem Druckspeicher 76. Die Pumpe 74 bzw. der Druckspeicher 76 stehen über jeweilige Leitungen 78, 80 und in diesen angeordneten beispielsweise ebenfalls analog schaltenden Ventilen 82, 84 in Verbindung mit den jeweiligen Sammelleitungen 64, 66. Somit können über diese Ventile 82, 84 die Ausgleichskammern 34 der beiden Gruppen 52, 54 von Druckausgleichsanordnungen bzw. auch die Verdrängungskammern 48', 48", 50', 50" der beiden Gruppen 48, 50 von Verdrängungskammern wahlweise in Verbindung mit der Pumpe 74 bzw. dem Druckspeicher 76 gebracht werden, um den Druck des ersten Dämpferfluids zu erhöhen, oder in Verbindung mit dem Reservoir 70 gebracht werden, um erstes Dämpferfluid abzugeben bzw. dessen Druck zu mindern.

Mit der in Fig. 2 in prinzipieller Art und Weise gezeigten Ausgestaltung einer Torsionsschwingungsdämpferanordnung 10 wird es möglich, die Dämpfungscharakteristik bei Relativdrehung zwischen der Primärseite 12 und der Sekundärseite 14 stark zu beeinflussen, und zwar jeweils unabhängig voneinander für den Schubzustand und den Zugzustand. Dabei kann beispielsweise angenommen werden, dass im Zugzustand, also einem Zustand, in welchem ein Drehmoment von einem Antriebsaggregat in den Antriebsstrang eingeleitet wird, die Gruppe 48 von Verdrängungskammern und mithin die dieser zugeordnete Gruppe 52 von Druckausgleichsanordnungen wirksam ist, während im Schubzustand, also einem Zustand, in welchem ein Drehmoment in das Antriebsaggregat eingeleitet wird und dessen Bremseffekt genutzt wird, die Gruppe 50 von Verdrängungskammern aktiv ist, also in ihrem Volumen verringert wird, und mithin die Gruppe 54 von Druckausgleichsanordnungen wirksam ist, um eine Rückstellkraft zu erzeugen. Da jede der Druckausgleichsanordnungen 52' bzw. 54' durch das jeweils zugeordnete erste Schaltventil 56 bzw. 58 wahlweise zur jeweiligen Gruppe zu bzw. von dieser abkoppelbar ist, kann abhängig vom Betriebszustand eines Antriebsstrangs die Dämpfungscharakteristik, die durch eine jeweilige Gruppe 52 oder 54 von Druckausgleichsanordnungen bereitgestellt wird, beeinflusst werden. Insbesondere erkennt man in Fig. 2 eine parallele Schaltung der Druckausgleichsanordnungen 52 bzw. 54 bzw. deren Ausgleichskammern 34, so dass lediglich durch entsprechende Ansteuerung eines einer jeweiligen Ausgleichskammer 34 zugeordneten Schaltventils 56 oder 58 diese Ausgleichskammer aktiv oder inaktiv geschaltet werden kann. Das Zu- bzw. Abschalten einer speziellen der Druckausgleichsanordnungen 52', 54' beeinflusst jedoch nicht den Zu- bzw. Abschaltzustand der jeweils anderen Druckausgleichsanordnungen 54', 52' einer jeweiligen Gruppe 52 oder 54.

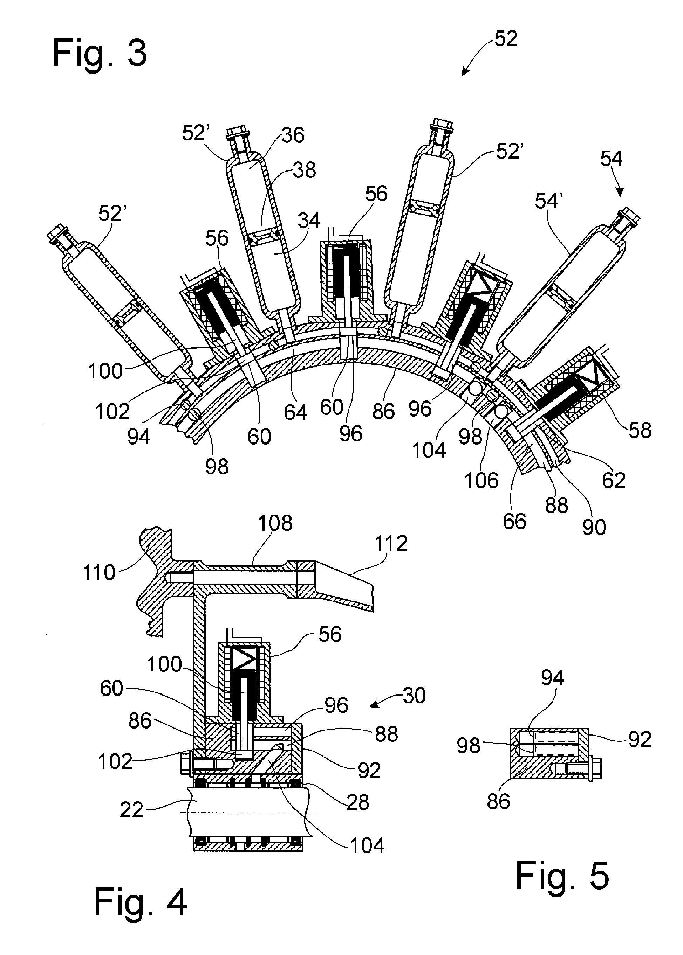

Eine konstruktive Ausführung insbesondere der Druckausgleichsanordnungen 52', 54' bzw. der zugeordneten ersten Schaltventile wird nachfolgend mit Bezug auf die Fig. 3 bis 5 beschrieben.

Man erkennt in der Fig. 3 einen auch in Fig. 1 dargestellten ringartigen Träger 86 für die Druckausgleichsanordnungen 52' bzw. 54'. Diese sind sternartig um die Drehachse angeordnet. In dem ringartigen Träger 86 sind zwei radial gestaffelt liegende Nuten 88, 90 gebildet, die, wie die Fig. 5 dies zeigt, axial durch ein Abschlusselement 92 verschlossen sind.

Man erkennt in Fig. 3 weiter, dass zwischen jeweils zwei Druckausgleichsanordnungen 52', 54' ein erstes Schaltventil 56 angeordnet ist, wobei hier die Zuordnung derart ist, dass eine Druckausgleichsanordnung 52' und dass rechts, also im Uhrzeigersinn folgende erste Schaltventil 56 einander zugeordnet sind. Entsprechendes gilt dann für die Schaltventile 58 und die diesen zugeordneten Druckausgleichsanordnungen 54'. In Zuordnung zu jedem Paar von Druckausgleichsanordnung 52', 54' und erstem Schaltventil 56, 58 ist durch beispielsweise in entsprechende axiale Bohrungen eingeschobene Abschlussstifte 94 die Nut 90 in einzelne Segmente unterteilt, welche über Öffnungen 96 in Verbindung mit der radial inneren Nut 88 stehen. Auch diese Nut 88 ist durch derartige Abschlussstifte 98 in mehrere Segmente unterteilt, wobei diese Segmente der Nut 88 im Wesentlichen auch die Sammelleitungen 64 bzw. 66 bilden. Der durch die Öffnungen 96 bereitgestellte Strömungsweg entspricht jeweils den Leitungen 60 im Falle der Gruppe 52 von Druckausgleichsanordnungen bzw. 62 im Falle der Gruppe 54 von Druckausgleichsanordnungen.

Jedes erste Schaltventil 56, 58 umfasst einen im dargestellten Beispiel durch Elektromagnetwirkung radial verschiebbaren Ventilschieber 100, dessen Ventilschieberkopf 102 eine jeweils zugeordnete Öffnung 96 entweder absperrt, wie im Falle der beiden links in Fig. 3 gezeigten ersten Schaltventile, oder freigibt, wie im Falle der beiden rechts in Fig. 3 gezeigten ersten Schaltventile. Dies bedeutet, dass bei der Darstellung der Fig. 3 die beiden links liegenden Druckausgleichsanordnungen 52' abgekoppelt sind, also ihre Ausgleichsräume 34 nicht über die Sammelleitung 64 und eine von dieser weg führende Öffnung 104 in Verbindung mit der Drehdurchführung 26 sind. Lediglich die noch verbleibende dritte Druckausgleichsanordnung 52 von rechts ist hier zugeschaltet und somit, möglicherweise in Verbindung mit weiteren hier nicht gezeigten Druckausgleichsanordnungen, über die Drehdurchführung 26 in Verbindung mit den zugeordneten Verdrängungskammern. Auch die einzige hier gezeigte Druckausgleichsanordnung 54' der Gruppe 54 von Druckausgleichsanordnungen ist über die Sammelleitung 66 und eine Öffnung 106 in Verbindung mit der Drehdurchführung 26 und somit den zugeordneten Verdrängungskammern. Durch entsprechende Ansteuerung der verschiedenen ersten Schaltventile wird es somit also möglich, beliebig die einzelnen Druckausgleichsanordnungen 52' bzw. 54' für die Schwingungsdämpfungsfunktion freizugeben, also an die jeweilige Sammelleitung 64 bzw. 66 anzukoppeln, oder inaktiv zu schalten, also von der jeweiligen Sammelleitung 64 oder 66 abzukoppeln.

Man erkennt in Fig. 4 noch, dass der Träger 86 über einen weiteren Träger 108 zwischen einem Motorblock 110 und einer Getriebeglocke 112 gehalten bzw. getragen sein kann, so dass durch Verschraubung einerseits ein fester Verbund realisiert wird und andererseits grundsätzlich eine kompakte Bauweise realisiert werden kann. Bei entsprechend aufwendiger Konstruktion können Träger 108, 106 und der nicht rotierende Teil der Drehdurchführung 26 auch einstückig ausgebildet sein.

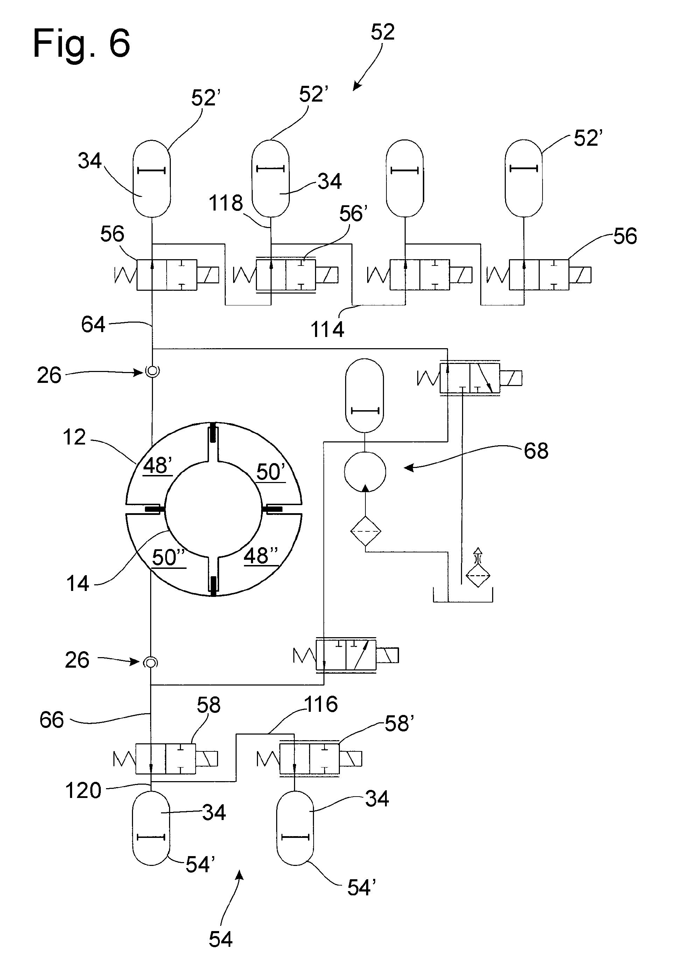

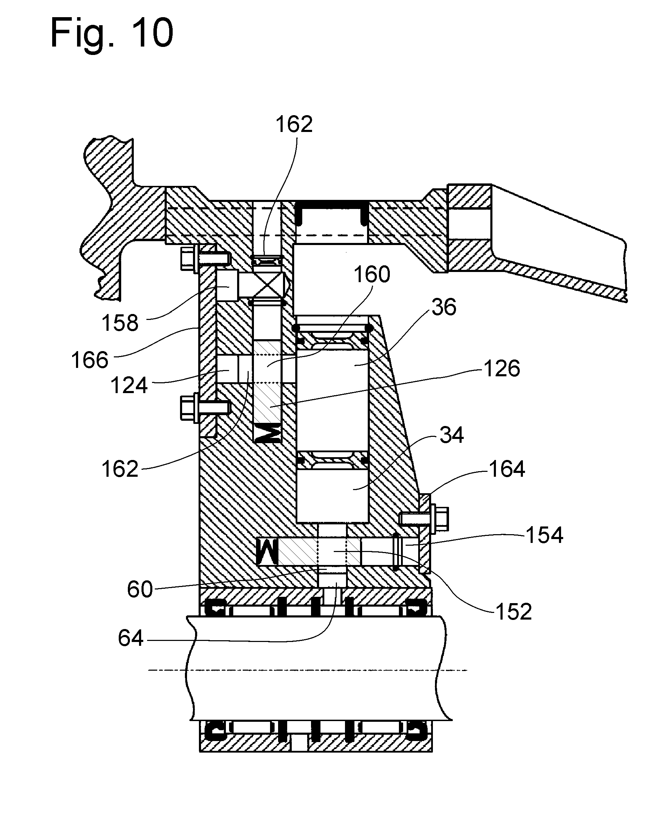

Eine alternative Ausgestaltungsvariante hinsichtlich der Schaltung der einzelnen Druckausgleichsanordnungen 52', 54' ist in Fig. 6 gezeigt. Hier ist eine serienmäßige Schaltung der einzelnen Druckausgleichsanordnungen 52', 54' vorhanden, bei welcher eine von einem ersten Schaltventil 56 bzw. 58 jeweils weg führende Leitung 114, 116 in eine Leitung 118 bzw. 120 einmündet, die von einem Ausgleichsraum 34 einer in der Serie vorangehenden Druckausgleichsanordnung 52', 54' zu dem ihr zugeordneten ersten Schaltventil 56 bzw. 58 führt. Die in der Serie jeweils erste, also in Fig. 10 ganz links angeordnete Druckausgleichsanordnung 52' bzw. 54' steht über das ihr zugeordnete erste Schaltventil 56, 58 und die jeweilige Sammelleitung 64 bzw. 66 in Verbindung mit der Drehdurchführung 26 und mithin den zugeordneten Verdrängungskammern 48', 48", 50', 50".

Auch mit dieser serienmäßigen Schaltung der Druckausgleichsanordnungen 52', 54' wird es möglich, die Anzahl der einzelnen aktiven bzw. deaktivierten Druckausgleichsanordnungen 52', 54' beliebig zu variieren. Wird beispielsweise bei der Gruppe 52 von Druckausgleichsanordnungen das erste Schaltventil 56' der in der Serie an zweiter Stelle angeordneten Druckausgleichsanordnung 52' in einen Sperrzustand gebracht, so ist nicht nur diese Druckausgleichsanordnung 52', sondern alle in der Serie dann noch folgenden, in der Darstellung der Fig. 6 also weiter rechts liegenden Druckausgleichsanordnungen deaktiviert. Es wird somit möglich, durch das Umschalten von einem einzigen ersten Schaltventil 56, 58, beispielsweise dem Schaltventil 56', eine größere Anzahl an Druckausgleichsanordnungen 52', 54' gleichzeitig zu bzw. abzuschalten, ohne den Schaltzustand der anderen ersten Schaltventile 56, 58 beeinflussen zu müssen, vorausgesetzt, dass diese nicht in einem Sperrzustand sind.

Es ist selbstverständlich, dass die vorangehend erläuterte parallele Schaltung und die serielle Schaltung miteinander kombiniert werden können. So kann in einer Serienschaltung beispielsweise auch eine Parallelschaltung zweier oder mehrerer Druckausgleichsanordnungen vorhanden sein.

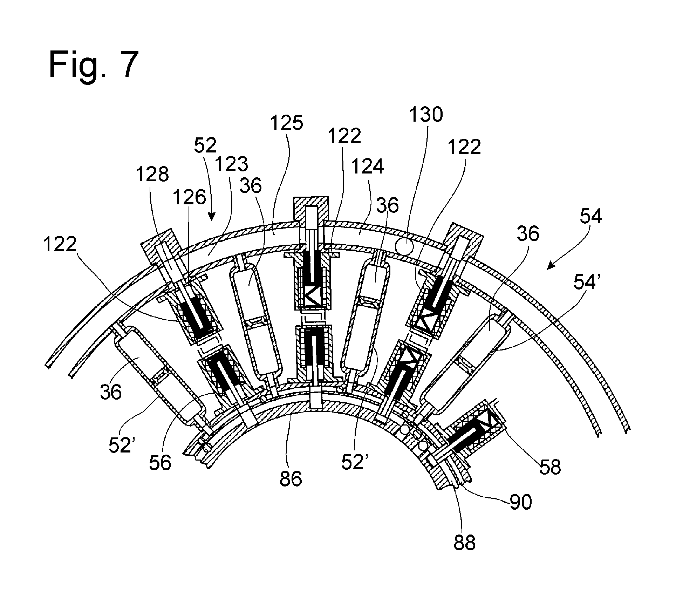

Eine weitere alternative Ausgestaltungsart ist in Fig. 7 gezeigt. Hier ist in Zuordnung zu den verschiedenen Druckausgleichsanordnungen 52' bzw. 54' jeweils ein zweites Schaltventil 122 vorgesehen. Die Arbeitsräume 36 der Druckausgleichsanordnungen 52', 54' sind zu einer diese beispielsweise außen ringartig umgebenden Sammelleitung 124 offen. Jeweils zwischen zwei Einmündungs- bzw. Anbindungsstellen von Arbeitsräumen 36 zu der Sammelleitung 124 kann ein zweites Schaltventil 122 die Sammelleitung 124 sperren, wie anhand des in Fig. 7 ganz links liegenden zweiten Schaltventils erkennbar, oder freigeben, wie anhand der beiden anderen gezeigten zweiten Schaltventile 122 erkennbar. Auch hier weist jedes beispielsweise elektromagnetisch erregbare zweite Schaltventil 122 einen im Wesentlichen radial bewegbaren Ventilschieber 126 mit einem Ventilschieberkopf 128 auf, der die Sammelleitung 124 dann, je nach Stellzustand, freigibt oder blockiert. Beispielsweise an einer Umfangsposition ist die Sammelleitung 124 über eine Öffnung 130 in Verbindung mit einer Quelle für unter Druck stehendes zweites Dämpferfluid.

Je nach Stellzustand der zweiten Schaltventile 122 wird es somit also möglich, einen oder mehrere der Arbeitsräume 36 in Verbindung mit der Quelle für unter Druck stehendes zweites Dämpferfluid zu bringen. Werden beispielsweise in der Darstellung der Fig. 5 das rechts liegende und das mittig erkennbare zweite Schaltventil 122 in ihre Schließstellung gebracht, so ist lediglich der Arbeitsraum 36 derjenigen Druckausgleichsanordnung 52' in Verbindung mit der Quelle für unter Druck stehendes zweites Dämpferfluid, dessen Einmündung der Öffnung 130 am nächsten ist. Alle anderen sind abgekoppelt. Auf diese Art und Weise wird es möglich, durch das Zu- bzw. Abkoppeln beliebig vieler Arbeitsräume 36 den dort vorhandenen Druck des zweiten Dämpferfluids zu variieren, was selbstverständlich einen elementaren Einfluss auf die Dämpfungscharakteristik hat, da durch diesen Druck die bei Kompression auch entstehende Rückstellkraft beeinflusst wird.

Bei der in Fig. 7 gezeigten Variante ist wieder eine serielle Schaltung der einzelnen Arbeitsräume 36 vorhanden, bei welcher durch die Betätigung eines einzigen zweiten Schaltventils 122 eine Mehrzahl der dann in Serie folgenden Arbeitsräume 36 gleichzeitig zu bzw. abgekoppelt werden kann, ohne die diesen jeweils zugeordneten zweiten Schaltventile 122 betätigen zu müssen. Auch hier mündet also eine von einem zweiten Schaltventil 122 weg führende Leitung 123, bereitgestellt durch einen Abschnitt der Sammelleitung 124, in eine Leitung 125 ein, die von einer anderen Arbeitskammer 36 zu dem dieser zugeordneten zweiten Schaltventil 122 führt. Es sei darauf hingewiesen, dass selbstverständlich, ähnlich wie vorangehend mit Bezug auf die Ausgleichsräume beschrieben, auch hier die Gruppen 52, 54 von Druckausgleichsanordnungen jeweils voneinander entkoppelt werden können, wozu beispielsweise rechts von dem in der Fig. 5 ganz rechts erkennbaren zweiten Schaltventil 122 die Sammelleitung 124 durch einen Abschlussstift zu unterbrechen wäre und den Druckausgleichsanordnungen 54' dann eine eigene Öffnung bzw. Verbindung mit der Quelle für unter Druck stehendes zweites Dämpferfluid zuzuordnen wäre.

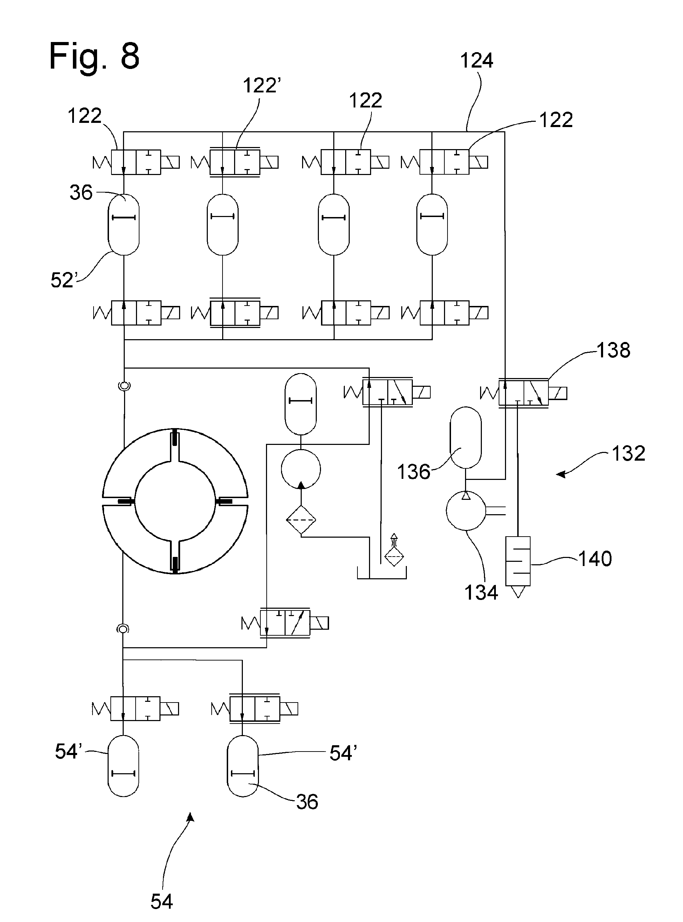

Die Fig. 8 zeigt eine schaltbildartige Darstellung, bei welcher die Arbeitsräume 36 der Druckausgleichsanordnung 52' über die jeweils zugeordneten zweiten Schaltventile 122 in paralleler Art und Weise an die Sammelleitung 124 angekoppelt sind. Somit kann jeder Arbeitsraum 36 für sich alleine und ohne Beeinflussung der Zu- bzw. Abkopplung der anderen Arbeitsräume geschaltet werden und mithin das Dämpfungsverhalten der jeweils betroffenen Druckausgleichsanordnung beeinflusst werden. Man erkennt in der Fig. 8 weiter die Quelle 132 für unter Druck stehendes zweites Dämpferfluid. Diese umfasst einen Kompressor 134 und einen Druckspeicher 136. Diese können über ein weiteres beispielsweise elektromagnetisch schaltbares Ventil 138 an die Sammelleitung 124 angekoppelt werden. Um den Druck in den Arbeitsräumen 36 senken zu können, kann die Sammelleitung 124 beispielsweise über einen Schalldämpfer 140 drucklos geschaltet werden. Wie anhand der Schaltventile 138 bzw. auch 122' veranschaulicht, können auch hier Ventile zum Einsatz gelangen, die ein analoges Schaltverhalten aufweisen, um eine sehr feinfühlige Dosierung des Zu- bzw. Abschaltens zu realisieren.

Es sei noch einmal darauf hingewiesen, dass selbstverständlich auch in Zuordnung zu den Druckausgleichsanordnungen 54' der Gruppe 54 eine derartige Ausgestaltung mit Ankopplung von deren Arbeitsräumen 36 an die Quelle 132 für unter Druck stehendes zweites Dämpferfluid realisierbar ist.

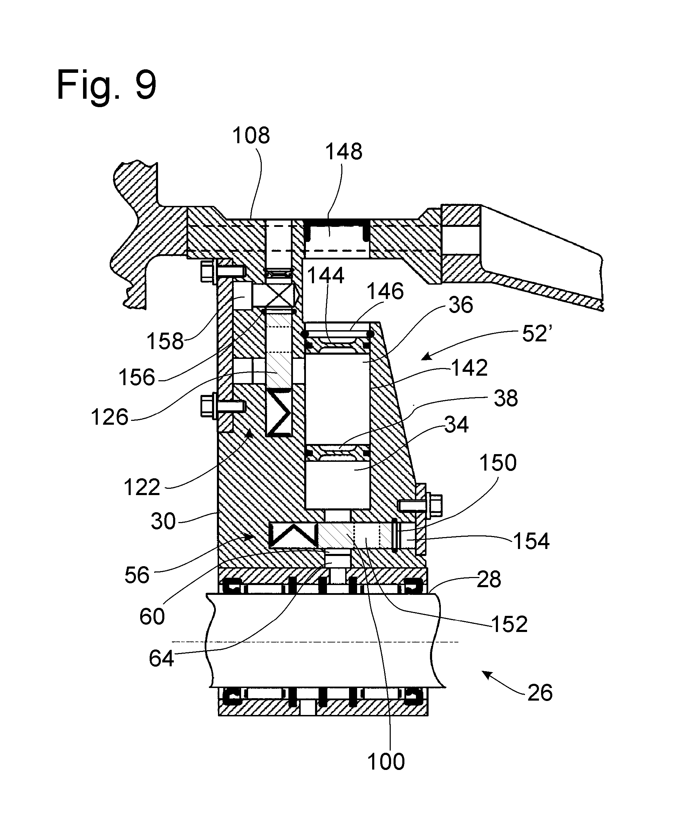

In den vorangehend beschriebenen Ausgestaltungsformen sind die verschiedenen ersten bzw. zweiten Schaltventile elektromagnetisch zu betätigen. Mit Bezug auf die Fig. 9 und 10 wird im Folgenden eine Variante beschrieben, bei welcher die Beteiligung der jeweiligen Schaltventile, veranschaulicht anhand eines ersten Schaltventils 56 und eines zweiten Schaltventils 122, durch Druckfluid, also beispielsweise hydraulisch, erfolgt.

Man erkennt in der Fig. 9 zunächst den nicht rotierenden Teil 30 der Drehdurchführung 26, in welchen von radial außen Bohrungen 142 eingebracht sind, welche jeweils das Volumen für die Arbeitskammern 36 und die Ausgleichskammern 34 bereitstellen. In diesen Bohrungen 142 ist das Trennelement 38 als Verschiebekolben radial bewegbar. Ein kolbenartiges Abschlusselement 144 ist nahe der Öffnung einer jeweiligen Bohrung 142 durch einen Sicherungsring 146 gegen Herausfallen gehalten und schließt somit die jeweilige Arbeitskammer 36 nach radial außen ab.

An dem rotierenden Teil 30 ist als integraler Bestandteil auch der vorangehend mit Bezug auf die Fig. 3 bereits angesprochene Träger 108 vorgesehen. In Zuordnung zu einer jeweiligen Bohrung 142 weist auch dieser eine Bohrung 148 auf, primär um die jeweiligen Bohrungen 142 einbringen zu können. Um das Eintreten von Verunreinigungen zu vermeiden, können die Bohrungen 148 durch Verschlussstopfen abgeschlossen sein.

Radial innerhalb der Bohrungen 142 bzw. einer jeweiligen Druckausgleichsanordnung 52' liegt ein zugeordnetes erstes Schaltventil 56 mit einem nunmehr im Wesentlichen in axialer Richtung bewegbaren Ventilschieber 100. Dieser ist federvorgespannt so positioniert, dass er in einer Schließstellung ist und durch einen Sicherungsring 150 in der ihn aufnehmenden Bohrung im nicht rotierenden Teil 30 der Drehdurchführung 26 gehalten ist. Man erkennt, dass eine Durchlassöffnung 152 des Ventilschiebers 100 hier außer Ausrichtung mit einer dann folgenden Leitung 60 ist, die zur Sammelleitung 64 führt. Über eine Steuerleitung 154 kann der auf den Ventilschieber 100 wirkende Fluiddruck erhöht werden, so dass dieser sich entgegen der Federvorspannung in die in Fig. 10 gezeigte Positionierung verschiebt, in welcher die Durchlassöffnung 152 nunmehr mit der Leitung 60 ausgerichtet ist und somit den Ausgleichsraum 34 an die Sammelleitung 64 und mithin die zugeordneten Verdrängungskammern ankoppelt.

Auch die zweiten Schaltventile 122 umfassen einen Ventilschieber 126, der im Wesentlichen radial verlagerbar ist. Der Ventilschieber 126 ist federvorgespannt und wird durch einen Sicherungsring 156 in der ihn aufnehmenden Bohrung in dem nicht rotierenden Teil 30 der Drehdurchführung gehalten. In diese Bohrung mündet eine Steuerleitung 158 ein, über welche der Ventilschieber 126 in der ihn aufnehmenden Bohrung mit Druck belastet und somit entgegen der Federvorspannung in die in Fig. 10 gezeigte Stellung verschiebbar ist, in welcher eine Durchlassöffnung 160 des Ventilschiebers 126 in Ausrichtung mit einer Bohrung 162 ist, welche die Arbeitskammer 36 mit der Sammelleitung 124 verbindet. Um diese Druckbelastung realisieren zu können, ist die den Ventilschieber 126 aufnehmende Bohrung durch ein stopfenartiges oder einen Sicherungsring gehaltenes Verschlusselement 162 abgeschlossen.

Man erkennt aus der vorangehenden Beschreibung, dass hier eine sehr kompakte Bauweise geschaffen ist, bei welcher alle erforderlichen Öffnungen bzw. Kanäle durch entsprechende Bohrungen bzw. Nuten in einem einzigen Materialblock bereitgestellt werden können. Insbesondere können auch die verschiedenen Schaltventile durch die feinfühlige Ansteuerung mit bestimmten Steuerdrücken nicht nur digital geschaltet, sondern auch in analoger Art und Weise in ihrem Durchlasszustand verändert werden, um somit ein sanftes Ankoppeln bzw. Abkoppeln der Arbeitsräume bzw. Ausgleichsräume zu ermöglichen. Die Sammelleitung 124 sowie die Steuerleitungen 158, 154 können in einfacher Weise als Nuten an axialen Stirnflächen vorgesehen sein und durch jeweilige plattenartige Abschlusselemente 164 bzw. 166 dann fluiddicht abgeschlossen sein.

Mit dieser in den Fig. 9 und 10 gezeigten Bauweise lässt sich vor allem die vorangehend erläuterte parallele Schaltung der einzelnen Arbeits- bzw. Ausgleichsräume in einfacher Art und Weise realisieren. Die Ventilschieber 100 oder/und 126 können auch in die jeweilige Offenstellung vorgespannt sein und durch die Steuerdrücke in Richtung schließen belastet werden.

Grundsätzlich ist auszuführen, dass selbstverständlich bei der erfindungsgemäßen Torsionsschwingungsdämpferanordnung die Anzahl der jeweiligen Druckausgleichsanordnungen in den einzelnen Gruppen entsprechen den in einem Antriebsstrang auftretenden Anforderungen bereits in der Konstruktionsphase ausgewählt werden kann. So können selbstverständlich auch in Zuordnung zu beiden Gruppen von Verdrängungskammern gleich viele Druckausgleichsanordnungen vorgesehen sein. Auch die Anzahl an Verdrängungskammern kann selbstverständlich variiert werden. Ein elementarer Vorteil besteht bei der erfindungsgemäßen Ausgestaltung nicht nur in der Zu- bzw. Abschaltbarkeit einzelner Druckausgleichsanordnungen bzw. deren Zu- bzw. Abschaltbarkeit zu einer Quelle für unter Druck stehendes zweites Dämpferfluid. Auch die definierte Zuordnung von einzelnen Druckausgleichsanordnungen zu bestimmten der Verdrängungskammern vereinfacht den Aufbau und ermöglicht eine präzisere Auslegung auf die im Schubzustand einerseits bzw. im Zugzustand andererseits auftretenden Anforderungen. Dies ist ein eigenständiger Aspekt der vorliegenden Erfindung, der selbstverständlich vorteilhafterweise damit kombiniert werden kann, dass einzelne der Druckausgleichsanordnungen bzw. der Ausgleichsräume derselben wahlweise zu- oder abgeschaltet werden können oder/und dass einzelne oder mehrere der Arbeitskammern in Verbindung mit einer Quelle für unter Druck stehendes zweites Dämpferfluid gebracht werden können.

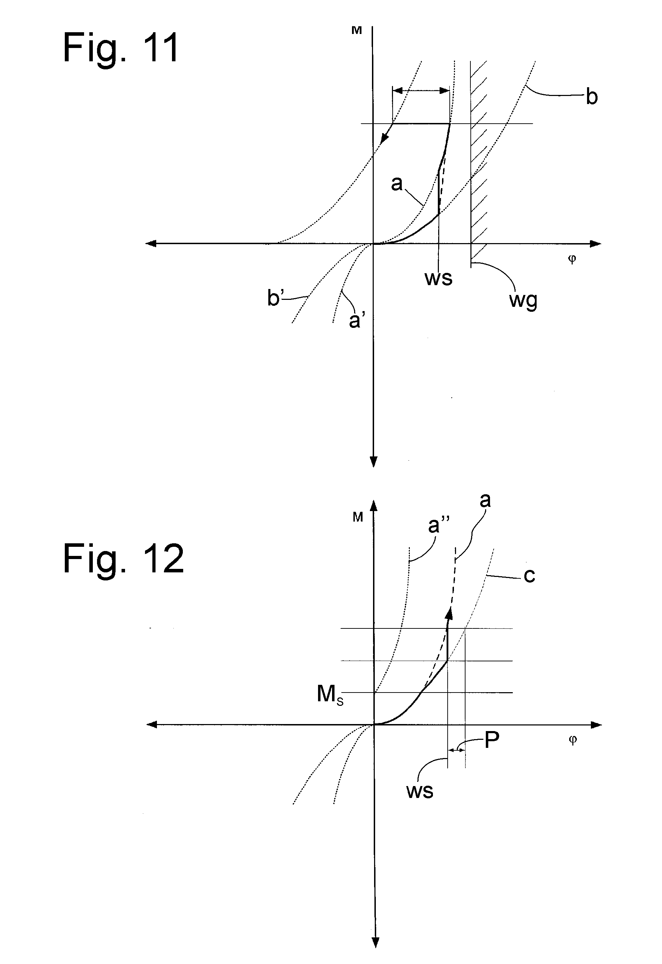

Im Folgenden werden mit Bezug auf die Fig. 11 bis 16 verschiedene Betriebsarten erläutert, die mit dem erfindungsgemäßen Aufbau einer Torsionsschwingungsdämpferanordnung ermöglicht werden. Man erkennt in diesen Diagrammen jeweils aufgetragen über dem Relativdrehwinkel zwischen Primärseite und Sekundärseite das über die Torsionsschwingungsdämpferanordnung und mithin das erste Dämpferfluid übertragene Drehmoment M.

Man erkennt in Fig. 11 eine parabelartig ansteigende Kennlinie a, welche den progressiven Kennlinienverlauf einer Druckausgleichsanordnung veranschaulicht. Die Kennlinie b zeigt einen progressiven Verlauf für den Fall, dass zwei Druckausgleichsanordnungen wirksam ist. Da diese ein größeres komprimierbares Volumen bereitstellen, ist der Verlauf der Kennlinie b flacher, als derjenige der Kennlinie a. Die Kennlinien a', b' stellen den gleichen Zusammenhang jeweils für den Schubzustand dar.

Es sei nun angenommen, dass ausgehend von der Neutralrelativdrehlage zunächst zwei Druckausgleichsanordnungen im Zugzustand wirksam sind, so dass das Gesamtsystem sich zunächst entlang der Kennlinie b bewegt. Bei Erreichen eines Abschaltwinkels ws wird eine der Druckausgleichsanordnungen abgeschaltet, so dass ein sprungartiger Übergang zur Kennlinie a stattfindet, die in diesem Bereich bereits eine deutlich größere Steigung aufweist. Dies bedeutet, dass die Torsionsschwingungsdämpferanordnung durch diesen Übergang deutlich steifer wird und die pro Drehmomenteneinheit auftretende Winkelzunahme abnimmt. Dieser Übergang kann beispielsweise dann stattfinden, wenn auf der Grundlage der Relativdrehgeschwindigkeit oder der Relativdrehbeschleunigung zwischen Primärseite und Sekundärseite erkannt wird, dass eine sehr schnelle Zunahme des Drehmoments vorliegt oder auftreten wird. Um bei herkömmlichen Gasfeder-Zweimassenschwungrädern dies zu kompensieren, müsste sehr schnell der Druck des ersten Dämpferfluids durch entsprechende Nachlieferung erhöht werden, was jedoch innerhalb der erforderlichen kurzen Zeiten oftmals nicht realisierbar ist.

Steigt das Drehmoment dann nicht weiter an, kann beispielsweise in einem mehr oder weniger stationären Zustand erstes Dämpferfluid nachgefüllt werden, also eine Verbindung zwischen den im Zugzustand wirksamen Verdrängungskammern und der Quelle für unter Druck stehendes erstes Dämpferfluid hergestellt werden, so dass bei im Wesentlichen gleichbleibendem Drehmoment aufgrund der Erhöhung des Drucks des ersten Dämpferfluids die Primärseite und die Sekundärseite bezüglich einander wieder zurückgedreht werden und mithin der Relativdrehwinkel abnimmt. Es kann dann weiterhin auch die zweite Druckausgleichsanordnung zugeschaltet werden, so dass bei sinkendem Drehmoment dann ein Verlauf auftritt, welcher dem der Kennlinie b entspricht.

Durch das Nachfüllen von erstem Dämpferfluid in einer Phase, in der dies ohne Zeitdruck erfolgen kann, wird vermieden, dass die Primärseite und die Sekundärseite einen durch eine Anschlagposition definierten Grenzwinkel wg erreichen. Die vorangehend bereits angesprochene analoge Schaltbarkeit der verschiedenen ersten Schaltventile kann genutzt werden, um, wie dies in Fig. 1 anhand einer Strichlinie veranschaulicht ist, einen sanften, also nicht sprunghaften Übergang zwischen den beiden Kennlinien zu realisieren und mithin auch Schaltgeräusche zu vermeiden.

In der Fig. 12 ist der Fall gezeigt, in welchem wieder zwei Druckausgleichsanordnungen betrachtet werden, die grundsätzlich den in Fig. 1 bereits erläuterten Verlauf a aufweisen. Eine der Druckausgleichsanordnung ist jedoch in vorgespanntem Zustand eingebaut. Das heißt, im Arbeitsraum dieser Druckausgleichsanordnung herrscht ein bestimmter Vordruck des zweiten Dämpferfluids vor, so dass dieser zunächst überwunden werden muss, also ein bestimmtes Schaltmoment M_{S} anliegen muss, um eine dann fortschreitende Kompression des zweiten Dämpferfluids zu bewirken. Steigt auch hier das Drehmoment an, so dass die Primärseite und die Sekundärseite ausgehend von der Neutral-Relativdrehlage sich bezüglich einander verdrehen, so ist zunächst nur eine der beiden Druckausgleichsanordnungen wirksam. Wird das Schaltmoment M_{S} erreicht, wird auch die andere aktiv, so dass das Gesamtsystem sich nunmehr auf einer Gesamtkennlinie c bewegt. Bei Erreichen eines Schaltwinkels ws wird die vorgespannte Druckausgleichsanordnung abgeschaltet, so dass wieder ein Übergang zur Kennlinie a stattfindet. Es wird auf diese Art und Weise ein in die wirksamen Verdrängungskammern einzuspeisendes Quantum an erstem Druckfluid eingespart, welches durch den Pfeil P in Fig. 12 bzw. den entsprechenden Relativdrehwinkel repräsentiert ist und welches erforderlich wäre, um sicherzustellen, dass die Anschlagposition nicht erreicht wird.

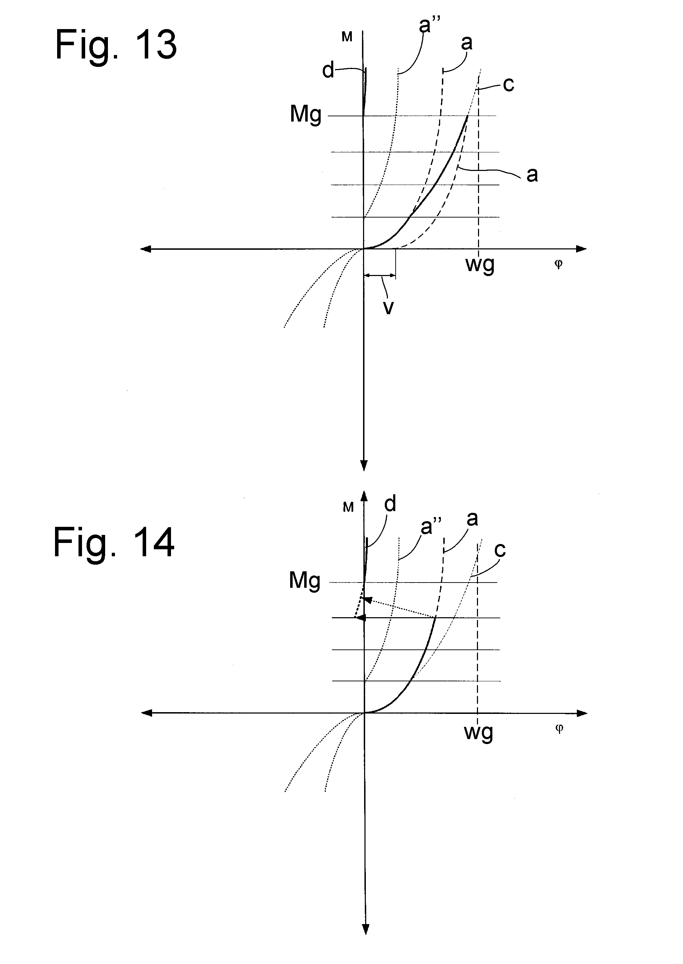

In Fig. 13 ist ein Fall dargestellt, in welchem eine starke Momentenerhöhung dazu genutzt wird, einzelne der Druckausgleichsanordnungen stark vorzuspannen und auch in diesem vorgespannten Zustand zu belassen bzw. abzuschalten, um später auftretende hohe Drehmomente abfangen zu können. Man erkennt, dass zunächst das System, ähnlich wie im Beispiel der Fig. 12, sich entlang einer Kennlinie c bewegt. Bei Erreichen eines bestimmten Grenzmomentes M_{G} wird eine Druckausgleichsanordnung abgekoppelt, so dass sich ein Kennlinienast d ergibt, der dann für weitere große Drehmomente zur Verfügung steht. Das System bewegt sich dann entlang der Kennlinie a für eine einzelne Gasfeder zurück, was zu einem Winkelversatz V führt, der durch Nachliefern von erstem Dämpferfluid kompensiert werden kann, um sicherzustellen, dass die Primärseite und die Sekundärseite wieder in ihre Neutral-Relativdrehlage gebracht werden.

Bei dem in Fig. 14 gezeigten Fall bewegt sich das System ausgehend von der Neutral-Relativdrehlage zunächst entlang der Kennlinie a für eine Druckausgleichsanordnung. Ist ein bestimmter Grenzwinkel erreicht, so kann die stark vorgespannt gehaltene Druckausgleichsanordnung mit ihrer Kennlinie d zugeschaltet werden, und zwar noch bevor das Grenzmoment M_{G} erreicht wird. Dies führt zu einem spontanen Zurückdrehen der Primärseite und der Sekundärseite in Richtung Neutral-Relativdrehlage und verhindert das Erreichen des Endanschlags.

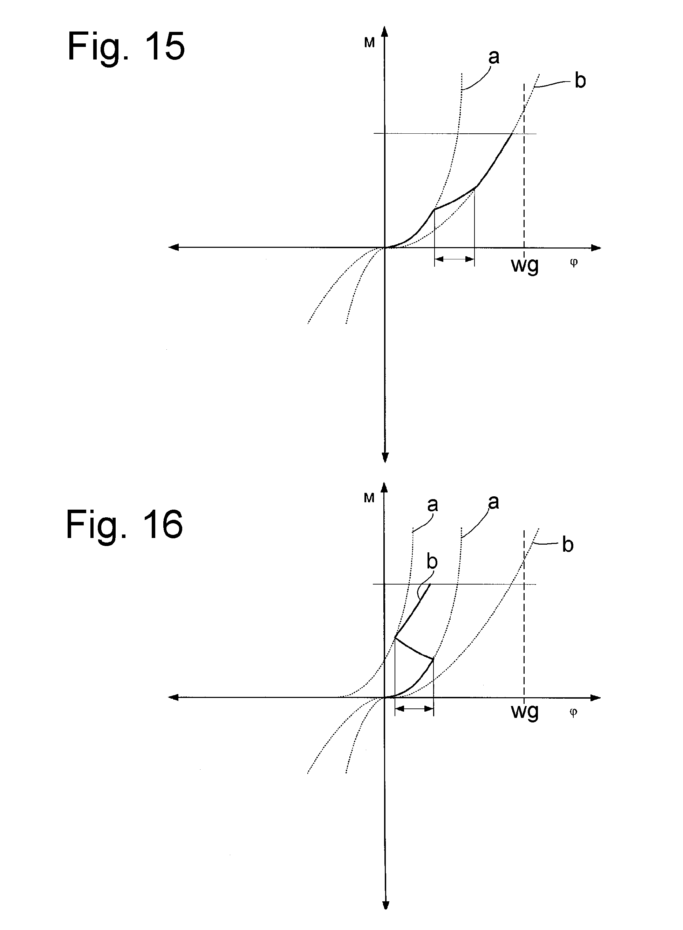

Die Fig. 15 stellt den Fall des Zuschaltens einer weiteren Druckausgleichsanordnung dar, also den Übergang von einer zunächst steileren Kennlinie a auf eine flachere Kennlinie b, wodurch die Torsionsschwingungsdämpferanordnung grundsätzlich weicher wird. Da in diesem Falle kein erstes Dämpferfluid nachgeliefert wird, findet ein vergleichsweise starker Zuwachs des Relativdrehwinkels statt.

Der Fall des Zuschaltens einer weiteren Druckausgleichsanordnung ist auch in Fig. 16 dargestellt, wobei jedoch gleichzeitig erstes Dämpferfluid nachgeliefert wird. Dies bedeutet, nach dem Zuschalten bewegt sich das System grundsätzlich auf einer Kennlinie b, jedoch zurückverschoben in Richtung der Neutral-Relativdrehlage, da mit dem Übergang zu einer größeren Anzahl an wirksamen Druckausgleichsanordnungen gleichzeitig erstes Dämpferfluid in die wirksamen Verdrängungskammern nachgefüllt worden ist und somit diese Rückstellung in Richtung Neutral-Relativdrehlage bewirkt wurde.

Es sei darauf hingewiesen, dass derartige Schaltvorgänge selbstverständlich auch für den Schubzustand möglich sind. Weiter ist zu betonen, dass, sofern vorangehend mit Bezug auf die Erläuterungen zu den Fig. 11-16 jeweils die Rede von "einer" oder "zwei" Druckausgleichsanordnungen war, dies nur beispielhaft ist und selbstverständlich in der vorangehend beschriebenen Art und Weise jeweils auch Gruppen von Druckausgleichsanordnungen gleichzeitig zu bzw. abgeschaltet werden können bzw. ein mehrfach gestaffeltes Zuschalten von mehreren Druckausgleichsanordnungen stattfinden kann.

## Patentansprüche

1. Torsionsschwingungsdämpferanordnung, insbesondere für den Antriebsstrang eines Fahrzeugs, umfassend eine Primärseite (12) und eine über eine Dämpferfluidanordnung mit der Primärseite (12) zur Drehung um eine Drehachse (A) und zur Relativdrehung bezüglich einander gekoppelte Sekundärseite (14), wobei die Dämpferfluidanordnung ein ein Drehmoment zwischen der Primärseite (12) und der Sekundärseite (14) übertragendes erstes Dämpferfluid mit geringerer Kompressibilität und ein bei Druckerhöhung des ersten Dämpferfluids belastetes zweites Dämpferfluid mit höherer Kompressibilität umfasst, wenigstens eine Gruppe (52, 54) von Druckausgleichsanordnungen (52', 54') außerhalb der Primärseite (12) und der Sekundärseite (14), wobei jede Druckausgleichsanordnung (52', 54') einen Ausgleichsraum (34) für erstes Dämpferfluid und einen durch einen Trennorgan (38) vom Ausgleichsraum (34) getrennten Arbeitsraum (36) für zweites Dämpferfluid aufweist, wobei bei wenigstens einer Gruppe (52, 54) von Druckausgleichsanordnungen wenigstens eine Druckausgleichsanordnung (52', 54') wahlweise zur Gruppe zukoppelbar oder von dieser abkoppelbar ist.

2. Torsionsschwingungsdämpferanordnung nach Anspruch 1,
**dadurch gekennzeichnet, dass** die Primärseite (12) und die Sekundärseite (14) wenigstens eine Verdrängungskammer (48', 48", 50', 50") begrenzen, deren Volumen bei Relativdrehung zwischen der Primärseite (12) und der Sekundärseite (14) variabel ist, und dass der wenigstens einen Verdrängungskammer (48', 48", 50', 50") eine Gruppe (52, 54) von Druckausgleichsanordnungen zugeordnet ist.

3. Torsionsschwingungsdämpferanordnung nach Anspruch 2,
**dadurch gekennzeichnet, dass** eine erste Gruppe (48) von Verdrängungskammern mit wenigstens einer ersten Verdrängungskammer (48', 48") und eine zweite Gruppe (50) von Verdrängungskammern mit wenigstens einer zweiten Verdrängungskammer (50', 50") vorgesehen sind, wobei bei Relativdrehung zwischen der Primärseite (12) und der Sekundärseite (14) in einer ersten Relativdrehung das Volumen der Verdrängungskammer(n) (48', 48") der ersten Gruppe (48) zunimmt und das Volumen der Verdrängungskammer(n) (50', 50") der zweiten Gruppe (50) abnimmt und bei Relativdrehung zwischen der Primärseite (12) und der Sekundärseite (14) in einer zweiten Relativdrehrichtung das Volumen der Verdrängungskammer(n) (48', 48") der ersten Gruppe (48) abnimmt und das Volumen der Verdrängungskammer(n) (50', 50") der zweiten Gruppe (50) zunimmt, und dass wenigstens einer Gruppe (48, 50) von Verdrängungskammern eine Gruppe (52, 54) von Druckausgleichsanordnungen zugeordnet ist.

4. Torsionsschwingungsdämpferanordnung nach Anspruch 3,
**dadurch gekennzeichnet, dass** der ersten Gruppe (48) von Verdrängungskammern eine erste Gruppe (52) von Druckausgleichsanordnungen zugeordnet ist und der zweiten Gruppe (50) von Verdrängungskammern eine zweite Gruppe (54) von Druckausgleichsanordnungen zugeordnet ist.

5. Torsionsschwingungsdämpferanordnung nach Anspruch 4,
**dadurch gekennzeichnet, dass** den Druckausgleichsanordnungen (52', 54') wenigstens einer Gruppe (52, 54) von Druckausgleichsanordnungen jeweils ein erstes Schaltventil (56, 58) zugeordnet ist, um diese Druckausgleichsanordnungen (52', 54') zur Gruppe zuzukoppeln oder von dieser abzukoppeln.

6. Torsionsschwingungsdämpferanordnung nach einem der Ansprüche 1 bis 5,
**dadurch gekennzeichnet, dass** bei wenigstens einer Gruppe (52, 54) von Druckausgleichsanordnungen wenigstens zwei Ausgleichskammern (34) parallel schaltbar sind.

7. Torsionsschwingungsdämpferanordnung nach Anspruch 5 und Anspruch 6,
**dadurch gekennzeichnet, dass** von den ersten Schaltventilen (56, 58) der Druckausgleichsanordnungen (52', 54') weg führende Leitungen (60, 62) für erstes Dämpferfluid zu einer Sammelleitung (64, 66) zu einer Drehdurchführung (26) führen.

8. Torsionsschwingungsdämpferanordnung nach einem der Ansprüche 1 bis 7,
**dadurch gekennzeichnet, dass** bei wenigstens einer Gruppe (52, 54) von Druckausgleichsanordnungen wenigstens zwei Ausgleichskammern (34) seriell schaltbar sind.

9. Torsionsschwingungsdämpferanordnung nach Anspruch 5 und Anspruch 8,
**dadurch gekennzeichnet, dass** eine von einem ersten Schaltventil (56, 58) einer Druckausgleichsanordnung (52', 54') weg führende Leitung (114, 116) für erstes Dämpferfluid zu einer von einem Ausgleichsraum (34) einer anderen Druckausgleichsanordnung (52', 54') zu deren ersten Schaltventil (56, 58) führenden Leitung (118, 120) für erstes erstes Dämpferfluid führt.

10. Torsionsschwingungsdämpferanordnung nach einem der Ansprüche 1 bis 9,
**dadurch gekennzeichnet, dass** bei wenigstens einer Gruppe (52) von Druckausgleichsanordnungen wenigstens ein Arbeitsraum (36) in und außer Verbindung mit einer Quelle (132) für unter Druck stehendes zweites Dämpferfluid bringbar ist.

11. Torsionsschwingungsdämpferanordnung nach Anspruch 10,
**dadurch gekennzeichnet, dass** dem wenigstens einen Arbeitsraum (36) ein zweites Schaltventil (122) zugeordnet ist.

12. Torsionsschwingungsdämpferanordnung nach Anspruch 11,
**dadurch gekennzeichnet, dass** die Arbeitsräume (36) mehrerer Druckausgleichsanordnungen (52') wenigstens einer Gruppe (52) von Druckausgleichsanordnungen über die diesen zugeordneten zweiten Schaltventile (122) parallel in und außer Verbindung mit der Quelle (132) für unter Druck stehendes zweites Dämpferfluid schaltbar sind.

13. Torsionsschwingungsdämpferanordnung nach Anspruch 12,
**dadurch gekennzeichnet, dass** von den zweiten Schaltventilen (122) weg führende Leitungen zu einer gemeinsamen Leitung (124) zur Quelle (132) für unter Druck stehendes zweites Dämpferfluid führen.

14. Torsionsschwingungsdämpferanordnung nach einem der Ansprüche 11 bis 13,
**dadurch gekennzeichnet, dass** die Arbeitsräume (36) mehrerer Druckausgleichsanordnungen (52') wenigstens einer Gruppe (52) von Druckausgleichsanordnungen über diesen zugeordnete zweite Schaltventile (122) seriell in und außer Verbindung mit der Quelle (132) für unter Druck stehendes zweites Dämpferfluid schaltbar sind.

15. Torsionsschwingungsdämpferanordnung nach Anspruch 14,
**dadurch gekennzeichnet, dass** eine von dem zweiten Schaltventil (122) einer Druckausgleichsanordnung (52') weg führende Leitung (123) für zweites Dämpferfluid zu einer von einem Arbeitsraum (36) einer anderen Druckausgleichsanordnung (52') zu deren zweiten Schaltventil (122) führenden Leitung (125) für zweites Dämpferfluid führt.

16. Torsionsschwingungsdämpferanordnung nach Anspruch 14 oder 15,
**dadurch gekennzeichnet, dass** eine Sammelleitung (124) vorgesehen ist, zu welcher die Arbeitsräume (36) mehrerer Druckausgleichsanordnungen (52') offen sind, und dass in der Sammelleitung (124) zwischen zwei Anbindungsstellen von Arbeitsräumen (36) ein zweites Schaltventil (122) vorgesehen ist, durch welches die Sammelleitung (124) wahlweise absperrbar oder freigebbar ist.

17. Torsionsschwingungsdämpferanordnung, insbesondere für den Antriebsstrang eines Fahrzeugs, umfassend eine Primärseite (12) und eine über eine Dämpferfluidanordnung mit der Primärseite (12) zur Drehung um eine Drehachse und zur Relativdrehung bezüglich einander gekoppelte Sekundärseite (14), wobei die Dämpferfluidanordnung ein ein Drehmoment zwischen der Primärseite (12) und der Sekundärseite (14) übertragendes erstes Dämpferfluid mit geringerer Kompressibilität und ein bei Druckerhöhung des ersten Dämpferfluids belastetes zweites Dämpferfluid mit höherer Kompressibilität umfasst, wobei die Primärseite (12) und die Sekundärseite (14) eine erste Gruppe (48) von Verdrängungskammern mit wenigstens einer ersten Verdrängungskammer (48', 48") und eine zweite Gruppe (50) von Verdrängungskammern mit wenigstens einer zweiten Verdrängungskammer (50', 50") begrenzen, wobei bei Relativdrehung zwischen der Primärseite (12) und der Sekundärseite (14) in einer ersten Relativdrehung das Volumen der Verdrängungskammer(n) (48', 48") der ersten Gruppe (48) zunimmt und das Volumen der Verdrängungskammer(n) (50', 50") der zweiten Gruppe (50) abnimmt und bei Relativdrehung zwischen der Primärseite (12) und der Sekundärseite (14) in einer zweiten Relativdrehrichtung das Volumen der Verdrängungskammer(n) (48', 48") der ersten Gruppe (48) abnimmt und das Volumen der Verdrängungskammer(n) (50', 50") der zweiten Gruppe zunimmt, wobei jeder Gruppe (48, 50) von Verdrängungskammern eine außerhalb der Primärseite (12) und der Sekundärseite (14) angeordnete Gruppe (52, 54) von Druckausgleichsanordnungen mit wenigstens einer Druckausgleichsanordnung (52', 54') zugeordnet ist, wobei jede Druckausgleichsanordnung (52', 54') einen mit der zugeordneten Gruppe (48, 50) von Verdrängungskammern in Verbindung stehenden oder bringbaren Ausgleichsraum (34) für erstes Dämpferfluid und einen von dem Ausgleichsraum (34) durch ein Trennorgan (38) getrennten Arbeitsraum (36) für zweites Dämpferfluid umfasst.
